# FASCICULE DE BREVET EUROPEEN

(11) **EP 1 545 774 B1**
(45) Date de publication et mention de la délivrance du brevet: **13.05.2009**
(21) Numéro de dépôt: 03773812.7
(22) Date de dépôt: 25.09.2003
(51) Int. Cl.: B01J 37/14, C10G 45/04, C10G 47/02, C10G 49/02

(54) **PASSIVATION PAR TRAITEMENT THERMIQUE OXYDANT DE CATALYSEUR D'HYDROTRAITEMENT SULFURE**
PASSIVIERUNG EINES HYDRBEHANDLUNGSKATALYSATORS MITTELS EINER OXIDIERENDEN WÄRMEBEHANDLUNG
OXIDIZING HEAT TREATMENT PASSIVATION OF SULPHIDE HYDROTREATMENT CATALYST

(30) Priorité: 27.09.2002 FR 0212034
(43) Date de publication de la demande: 29.06.2005
(73) Titulaire: EURECAT S.A., 07800 La Voulte-sur-Rhône (FR)
(72) Inventeur: DUFRESNE, Pierre, F-26000 Valence (FR); LABRUYERE, Franck, F-07800 Saint Georges Les Bains (FR)
(74) Mandataire: Schmitt, Nicolas A.J.
(86) Numéro de dépôt international: PCT/FR2003/002819
(87) Numéro de publication internationale: WO 2004/028691

(56) Documents cités:
- EP-A- 0 707 890
- US-A- 5 922 638
- US-A1- 2002 000 394
- LOUWERS, CRAJÉ, VAN DER KRAAN,GEANTET, PRINS: "the effect of passivation on the activity and structure of sulfided hydrotreating catalysts" JOURNAL OF CATALYSIS, vol. 144, no. 2, décembre 1993 (1993-12), pages 579-596, XP002243367 SAN DIEGO

## Description

Les catalyseurs d'hydrotraitement comprenant en général un support oxyde amorphe ou cristallisé (comme par exemple une alumine, une silice, une silice alumine, une zéolithe) sur lequel est déposé au moins un élément des groupes VIII et VI de la classification périodique ou une combinaison de plusieurs éléments issus de ces mêmes groupes comme par exemple les solides désignés CoMo/Al₂O₃, NiMo/Al₂O₃ ou NiW/Al₂O₃ doivent être préalablement sulfurés pour leur conférer des performances catalytiques pour l'ensemble des réactions d'hydroconversion des hydrocarbures, et notamment d'hydrotraitement (comme par exemple l'hydrodésulfuration, l'hydrodéazotation, la démétallation) et d'hydrogénation d'hydrocarbures insaturés. Cette étape de sulfuration préalable à l'acte catalytique peut être réalisée de deux manières différentes.

La première, dite sulfuration in situ, qui se caractérise par le fait que le catalyseur sous sa forme oxyde est, tout d'abord, chargé dans le réacteur de conversion d'hydrocarbure pour y être sulfuré. La seconde dite présulfuration hors site (« ex-situ »), comme décrite dans divers brevets de la demanderesse (US-4719195, US-5397756, EP-A 785022) se démarque de la précédente par le fait que la sulfuration ou présulfuration du catalyseur est réalisée dans une unité particulière distincte du réacteur de conversion d'hydrocarbures et notamment localisée loin du lieu d'utilisation du dit catalyseur.

Dans le cadre de cette dernière méthode de sulfuration hors site, les phases sulfures ainsi formées présentent une très grande réactivité vis à vis de l'air ambiant interdisant leur manipulation ultérieure sans un traitement complémentaire visant à limiter cette réactivité. Cette réactivité vis-à-vis des atmosphères oxydantes est décrite par une norme des Nations Unies qui définit deux classes de comportement, à savoir un comportement dit pyrophorique et un comportement dit auto-échauffant.

Le caractère pyrophorique d'un composé se caractérise par une combustion spontanée à la mise sous atmosphère oxydante. Le caractère auto-échauffant se caractérise, par une élévation de température importante résultant d'une oxydation rapide lorsque le produit est chauffé dans certaines conditions à une température de 140°C.

La phase sulfure obtenue à l'issue de ces procédés de présulfuration se révèle auto-échauffante ; pour remédier à ce défaut et pour rendre cette phase passivée, l'art antérieur décrit des méthodes consistant à faire adsorber à cette phase sulfure une certaine quantité d'oxygène. Ces méthodes ont un certain effet, mais parfois insuffisant. Le brevet de l'art antérieur EP 0 707 890 décrit une étape de passivation oxydante d'un catalyseur préalablement sulfuré, sous un flux gazeux contenant moins de 30 % vol d'oxygène soit moins de 30 kPa en pression partielle d'oxygène (de préférence moins de 10 %, de 5 % ou de 1 %), ce traitement étant réalisé à température ambiante. La demande de brevet WO-98/37.963 décrit également une étape de passivation oxydante d'un catalyseur de conversion préalablement sulfuré, sous un flux gazeux contenant 0,25-21 % vol. d'oxygène soit 0,25-21 kPa de pression partielle d'oxygène (de préférence 0,5-1,5 %) et à une température d'au plus 50°C. US 2002 000 394 ou encore "l'article de Louwers et al. vol. 144 N°2, 1993-12, pages 579-596", décrivent également des passivations de catalyseurs mais sans s'attacher à des conditions opératoires susceptibles d'être utilisées à l'échelle industrielle en raffinage ou pétrochimie.
Si les traitements décrits ci-dessus peuvent paraître suffisants pour la manipulation sous air de faible quantité de catalyseur sulfuré et passivé, ils ne permettent pas sans prendre des précautions importantes un chargement sous air des réacteurs des unités d'hydrotraitement du dit catalyseur car le comportement auto-échauffant est encore bien trop marqué. On a donc recherché un procédé qui relève encore la température d'auto-échauffement tout en gardant autant que possible de bonnes performances catalytiques.
Ainsi, la présente invention propose un procédé de passivation par traitement thermique sous un flux gazeux contenant une pression partielle en oxygène, en présence ou non de vapeur d'eau, conférant ainsi au dit catalyseur un comportement non auto-échauffant.

Un avantage important du procédé de la présente invention, qui sera décrit en détail ci-dessous, est le suivant : avec les procédés de l'art antérieur, certes il était possible dans certains cas de manipuler la phase sulfure à l'air ; en revanche, le chargement du catalyseur dans le réacteur en présence d'air pouvait provoquer un échauffement du catalyseur à cause de sa masse importante, et dès lors induire un environnement dangereux. Il était donc vivement déconseillé (bien que certains utilisateurs persistaient à le faire) de procéder à un chargement de catalyseur sous air dans un réacteur, mais il était recommandé pour plus de sûreté d'opérer sous une atmosphère d'azote. Avec le procédé selon l'invention, le chargement sous air d'un réacteur par du catalyseur sous forme phase sulfure devient maintenant possible et sans danger.

Plus précisément, la présente invention concerne la mise en oeuvre d'un procédé de passivation, postérieur à la sulfuration hors site du catalyseur, par traitement thermique en présence d'un gaz (ou flux gazeux) contenant de l'oxygène (par exemple provenant d'un air sec ou humide). Ce procédé de passivation peut tout aussi bien être mis en oeuvre sur une charge catalytique disposée en lit fixe (tel que dans un réacteur tubulaire) ou sur une charge catalytique disposée dans un lit en mouvement, notamment en lit mobile comme dans par exemple un four rotatif, un four à lit fluide, un four à bande ou un four à lit croulant. Dans l'invention, la phase sulfure est traitée à chaud, c'est-à-dire à une température supérieure à 50°C, ou encore égale ou supérieure à 55°C de préférence d'au plus 120°C ou encore entre 75 et 120°C, par un gaz ayant une pression partielle en oxygène de préférence d'au moins 2 kPa, de préférence au moins 7 kPa. Généralement, la pression partielle est d'au plus ou inférieure à 21,3 kPa. Cela permet d'être en présence d'une phase de moins en moins échauffante.

Comme les exemples le montrent, le procédé peut être réalisé avantageusement en deux étapes, la première avec une pression partielle d'oxygène de préférence supérieure ou égale à 2 kPa, et encore plus préférée d'au moins 7 kPa, la seconde étape avec une pression partielle en oxygène supérieure à celle de la première étape, la seconde étape débutant à la disparition de l'effet exothermique.

Dans un mode de réalisation préféré de la présente invention, en vue de réduire le comportement auto-échauffant du catalyseur préalablement sulfuré afin de permettre sa manipulation aisée sous air, en particulier lors de leur chargement dans les unités d'hydrotraitement, le dit catalyseur est traité en température sous un flux gazeux humide contenant une pression partielle en oxygène pouvant atteindre de préférence 21,3 kPa et une pression partielle d'eau de préférence égale ou supérieure à 2 kPa et pouvant aller jusqu'à une atmosphère saturée d'eau.

### Exemple 1 : Préparation du catalyseur de référence : sulfuration hors site sans passivation

Un catalyseur d'hydrotraitement contenant 18,9 % poids d'oxyde de molybdène et 4,2 % poids d'oxyde de cobalt déposés sur un support alumine de grande surface spécifique (220 m²/g) est sulfuré à pression atmosphérique par un mélange de composition 60 % volume de sulfure d'hydrogène (H₂S) et 40 % volume d'hydrogène (H₂). La sulfuration du catalyseur est obtenue en deux étapes, la première étant une phase de montée en température contrôlée (5°C/min), la seconde un palier de 1,5 heures à la température finale de sulfuration de 300°C. Après sulfuration, le catalyseur est refroidi sous flux d'azote jusqu'à la température ambiante. Une partie du produit est transférée sous atmosphère d'azote pour analyse de taux de sulfuration. Le reste est isolé sous azote et sert à la caractérisation du comportement auto-échauffant et à la mesure d'activité en hydrodésulfuration de gasoil.
Le rapport molaire expérimental S/Co+Mo et le taux de sulfuration sont indiqués dans le tableau ci dessous. Le taux de sulfuration est défini comme le rapport entre les ratios molaires S/(Co+Mo) expérimental et S/(Co+Mo) théorique, multiplié par 100, ce rapport théorique correspondant à la transformation totale des oxydes de molybdène MoO₃ et de cobalt CoO en sulfures respectivement MoS₂ et Co₉S₈, est de : [S/(Co+Mo)]ₜₕₑₒ = 1,67.

| Référence | S/(Co+Mo) | Taux de sulfuration (%) |
|---|---|---|
| Catalyseur S | 1,59 | 95 |

Le test d'auto-échauffement est celui défini par la norme UN, qui permet de classifier des produits dangereux de la classe 4,2. Un test modifié est aussi utilisé afin d'apporter plus d'information sur la sensibilité du produit caractérisé.

Le test de la norme UN (code IMDG) : un catalyseur est placé dans un cube grillagé de 10 cm d'arête ; au centre de ce cube est introduit un thermocouple qui permet d'enregistrer l'élévation de température du cube de 1 litre rempli de catalyseur. L'ensemble cube et thermocouple est ensuite placé à l'intérieur d'une étuve ventilée sous air préalablement chauffée à 140°C. Pendant 24 heures, les températures de l'étuve et du cube de catalyseur sont enregistrées. Le catalyseur est déclaré auto-échauffant, si sa température, au cours des 24 heures de test, dépasse les 200°C. Il appartient alors à la classe de produits dangereux, classe 4,2, au sous groupe des solides 3190.

Le test modifié, pour déterminer la température d'auto-échauffement, reprend le même mode opératoire si ce n'est que la température de l'étuve varie autour de 140°C par pas de 10°C, jusqu'à ce que la température interne du cube de catalyseur ne dépasse plus les 200°C. A chaque température, c'est un nouveau litre de catalyseur qui est testé. La notion de température critique d'auto-échauffement (ou TCAE) est définie par la température minimale de l'étuve avant le déclenchement du comportement auto-échauffant du catalyseur caractérisé.

Parallèlement au test d'auto-échauffement, le catalyseur est chargé sous atmosphère d'azote dans le réacteur d'une unité de test d'hydrodésulfuration de gasoil. La mise en régime du catalyseur est obtenue par augmentation progressive de la température de l'ambiante à 350°C, en présence d'un débit de gasoil de 2 litres par litre de catalyseur et par heure, à une pression d'hydrogène de 3 MPa et un débit d'hydrogène exprimé en ratio hydrogène sur huile de 400 1/1. Après 8 heures de stabilisation dans ces conditions, la température est ramenée à 330°C. Après 24 heures de stabilisation, les effluents liquides sont récoltés pendant 15 heures, le taux de soufre résiduel étant mesuré par Fluorescence X et comparé au taux initial du gasoil. Le modèle d'activité utilise une expression mathématique adoptant un ordre de réaction de 1,5. L'activité massique relative (RWA) est exprimée par le ratio entre l'activité du catalyseur testé et celle du même catalyseur oxyde sulfuré en mode in situ par ajout de DMDS (diméthyl disulfure) dans la charge liquide.

### Exemple 2: Passivation oxydante à température ambiante

Le même catalyseur que celui utilisé dans l'exemple 1 est sulfuré (mêmes conditions que dans l'exemple 1) et purgé sous azote à température ambiante, puis passivé selon la procédure dite de passivation oxydante à température ambiante (20°C). Ce traitement est réalisé en deux étapes. La première étape consiste en un traitement sous flux gazeux sec (air+azote) contenant une pression partielle en oxygène de 7,6 kPa. Le catalyseur est maintenu sous cette pression partielle en oxygène jusqu'à disparition de l'effet exothermique lié à la chimisorption de l'oxygène sur la phase sulfure (mesuré par la baisse de la température). La seconde étape est obtenue en stoppant l'alimentation en gaz diluant (azote) de façon à ce que la pression partielle en oxygène soit celle d'un air sec (21,3 kPa). Le catalyseur est laissé sous ce flux d'air jusqu'à disparition de l'effet exothermique lié à l'interaction de l'oxygène et de la phase sulfure. Après ce traitement de passivation le catalyseur est stocké sous atmosphère d'azote. Une partie de l'échantillon est ensuite prélevée sous azote pour en analyser le taux de sulfuration et la teneur en oxygène fixée pendant le traitement de passivation. Le reliquat est isolé sous cette même atmosphère pour la caractérisation de son comportement auto-échauffant et pour la mesure de son activité en hydrodésulfuration de gasoil.

Le ratio molaire S/Co+Mo, le taux de sulfuration ainsi que la quantité d'oxygène chimisorbée pendant le traitement de passivation sont présentés dans le tableau ci dessous. La quantité d'oxygène chimisorbée est déterminée par la différence entre la perte au feu expérimentale mesurée sur le catalyseur passivé (traitement au four à moufle sous air à 500°C pendant 4 heures) et la perte au feu théorique définie pour un taux de sulfuration identique.

| Référence | S/(Co+Mo) | Taux de sulfuration (%) | O₂ (%pds) |
|---|---|---|---|
| Catalyseur SP2 | 1,59 | 95 | 1,6 |

Le test d'activité sur ce catalyseur dénommé « catalyseur SP2 » utilise le même protocole de test que celui décrit dans l'exemple 1.

### Exemple 3 : Passivation d'un catalyseur sulfuré par traitement thermique à moyenne température sous flux oxydant sec

Le même catalyseur que celui utilisé dans l'exemple 1 est sulfuré (mêmes conditions que dans l'exemple 1) et purgé sous azote à température ambiante. Le catalyseur est ensuite passivé en utilisant le même protocole de passivation que celui utilisé dans l'exemple 2 à l'exception de la température de passivation qui est portée à 50°C. Une fois que le catalyseur est à cette température, le flux d'air/azote sec avec une pression partielle en oxygène de 7,6 kPa est introduit dans l'enceinte réactionnelle. Après disparition de l'effet thermique lié à la chimisorption de l'oxygène sur les phases sulfures, le flux d'azote est coupé et le catalyseur est maintenu uniquement sous flux d'air (pression partielle en oxygène de 21,3 kPa). Il est maintenu sous cette atmosphère jusqu'à ce que la température revienne à 50°C, puis refroidi sous azote jusqu'à température ambiante. Le catalyseur SP3 ainsi obtenu est caractérisé selon une méthodologie analogue à celle de l'exemple 2.

| Référence | S/(Co+Mo) | Taux de sulfuration (%) | O₂ (%pds) |
|---|---|---|---|
| Catalyseur SP3 | 1,59 | 95 | 1,7 |

### Exemple 4 : Passivation d'un catalyseur sulfuré par traitement sous flux oxydant sec à faible pression partielle en oxygène

Le même catalyseur que celui utilisé dans l'exemple 1 est sulfuré (mêmes conditions que dans l'exemple 1) et purgé sous azote à température ambiante, puis réchauffé jusqu'à la température de 100°C. Un flux gazeux constitué d'un mélange air/azote sec contenant une pression partielle en oxygène de 2,0 kPa est introduit. Le catalyseur est maintenu sous cette atmosphère jusqu'à ce que l'effet exothermique disparaisse totalement et que la température revienne à 100°C. Il est ensuite refroidi sous flux d'azote jusqu'à température ambiante. Le catalyseur SP4 ainsi obtenu est caractérisé selon une méthodologie analogue à celle de l'exemple 2.

| Référence | S/(Co+Mo) | Taux de sulfuration (%) | O₂ (%pds) |
|---|---|---|---|
| Catalyseur SP4 | 1,55 | 93 | 2,1 |

### Exemple 5 : Passivation d'un catalyseur sulfuré par traitement thermique à haute température sous flux oxydant sec

Le même catalyseur que celui utilisé dans l'exemple 1 est sulfuré (mêmes conditions que dans l'exemple 1) et purgé sous azote à température ambiante, puis chauffé jusqu'à la température de 120°C. Un flux gazeux constitué d'un mélange air/azote sec contenant une pression partielle en oxygène de 7,6 kPa est introduit. Après disparition de l'effet thermique, le flux d'azote est coupé et le catalyseur est maintenu uniquement sous flux d'air (pression partielle en oxygène de 21,3 kPa). Il est maintenu sous cette atmosphère jusqu'à ce que la température revienne à 120°C. Il est refroidi sous azote jusqu'à température ambiante. Le catalyseur SP5 ainsi obtenu est caractérisé selon une méthodologie analogue à celle de l'exemple 2.

| Référence | S/(Co+Mo) | Taux de sulfuration (%) | O₂ (%pds) |
|---|---|---|---|
| Catalyseur SP5 | 1,37 | 82 | 5,5 |

La valeur du taux de sulfuration est plus faible que celle des catalyseurs précédents, à cause probablement d'un début d'oxydation des phases sulfures en dioxyde de soufre.

### Exemple 6 : Passivation d'un catalyseur sulfuré par traitement thermique sous flux oxydant sec en lit fixe.

Le même catalyseur que celui utilisé dans l'exemple 1 est sulfuré (mêmes conditions que dans l'exemple 1) et purgé sous azote à température ambiante. Le catalyseur est ensuite passivé en utilisant le même protocole de passivation que celui utilisé dans l'exemple 2 à l'exception de la température de passivation qui est portée à 100°C. Une fois que le catalyseur est à température de passivation, le flux d'air/azote sec contenant une pression partielle en oxygène de 7,6 kPa est introduit. Après disparition de l'effet thermique lié à la chimisorption de l'oxygène sur les phases sulfures, le flux d'azote est coupé et le catalyseur est maintenu uniquement sous flux d'air (pression partielle en oxygène de 21,3 kPa). Après disparition de l'effet thermique, le catalyseur est refroidi sous azote jusqu'à température ambiante. Le catalyseur SP6 ainsi obtenu est caractérisé selon une méthodologie analogue à celle de l'exemple 2.

| Référence | S/(Co+Mo) | Taux de sulfuration (%) | O₂ (%pds) |
|---|---|---|---|
| Catalyseur SP6 | 1,55 | 93 | 3,7 |

### Exemple 7 : Passivation d'un catalyseur sulfuré par traitement thermique sous flux oxydant humide, en lit fixe.

Le protocole de préparation est analogue à celui de l'exemple 6, si ce n'est que l'air sec est remplacé par de l'air humide. Le mélange gazeux a des pressions partielles en oxygène de 7,6 kPa et en eau de 3,0 kPa. Le catalyseur SP7 ainsi obtenu est caractérisé selon une méthodologie analogue à celle de l'exemple 2. La quantité d'eau est déterminée par thermogravimétrie sous azote à 120°C.

| Référence | S/(Co+Mo) | Taux de sulfuration (%) | O₂ (%pds) | H₂O (%pds) |
|---|---|---|---|---|
| Catalyseur SP7 | 1,51 | 91 | 3,7 | 1,8 |

### Exemple 8 : Passivation d'un catalyseur sulfuré en lit mobile par traitement thermique sous flux oxydant sec

Le même catalyseur que celui utilisé dans l'exemple 1 est sulfuré dans une unité pilote à tube rotatif à pression atmosphérique par un mélange H₂S/ H₂ de composition volumique 60/40 à une température de 300°C pendant 3 heures. A la sortie du tube, le catalyseur est stocké dans une enceinte close maintenue sous balayage d'azote. Puis l'unité rotative est purgée sous azote et refroidie à la température de 100°C. Ensuite le catalyseur est à nouveau placé dans la trémie de chargement de l'unité rotative sous atmosphère d'azote. De l'air pur est introduit dans le four à un débit déterminé de façon à ce que la quantité d'oxygène introduite par unité de masse de catalyseur ne soit pas supérieure à 1,5 fois celle déterminée dans l'exemple 6, soit 200 NIt/h d'air pour 1 kg/h de catalyseur sulfuré. Le temps de résidence du produit dans le four est de 3 heures à 100°C. Ensuite, un échantillon est prélevé sous azote pour réaliser des analyses selon la même méthodologie que celle utilisée dans l'exemple 1.

| Référence | S/(Co+Mo) | Taux de sulfuration (%) | O₂ (%pds) |
|---|---|---|---|
| Catalyseur SP8 | 1,60 | 96 | 4,2 |

### Exemple 9 : Résultats des caractérisations et conclusion

Activité en hydrodésulfuration de gasoil, activité massique relative(relative weight activity RWA) et température critique d'auto-échauffement (TCAE) :

| Référence | Caractéristique | | Activité | RWA | TCAE |
|---|---|---|---|---|---|
| | | | | (%) | (°C) |
| - | Sulfuration in-situ | | 6,81 | 100 | / |
| Catalyseur S | Sulfuration ex-situ et pas de passivation | | 6,68 | 98 | <25 |
| Catalyseur SP2 | T=20°C - P_{O2}=7.6kPa | T=20°C - P_{O2}=21.3kPa | 7,01 | 103 | 75 |
| Catalyseur SP3 | T=50°C - P_{O2}=7.6kPa | T=50°C - P_{O2}=21.3kPa | 6,74 | 99 | 85 |
| Catalyseur SP4 | T=100°C - P_{O2}=2.0kPa | - | 6,90 | 101 | 95 |
| Catalyseur SP5 | T=120°C - P_{O2}=7.6kPa | T=120°C - P_{O2}=21.3kPa | 6,06 | 89 | 145 |
| Catalyseur SP6 | T=100°C - P_{O2}-7.6kPa | T=100°C - P_{O2}-21.3kPa | 6,78 | 100 | 115 |
| Catalyseur SP7 | T=100°C - P_{H2O}=3.0kPa - | T=100°C - P_{H2O}=3.0kPa - | 6,64 | 98 | 135 |
| | P_{O2}=7.6kPa | P_{O2}=21.3kPa | | | |
| Catalyseur SP8 | T=100°C - P_{O2}=21.3kPa | - | 6,91 | 101 | 140 |
| | lit mobile | | | | |

En conclusion, il apparaît qu'un catalyseur sulfuré non passivé ne peut pas être manipulé sous air. La seule passivation oxydante à température ambiante, améliore leur comportement auto-échauffant pour autoriser certaines manipulations du produit sous air. Néanmoins le produit reste sensible et il ne serait pas prudent d'en autoriser le chargement sous air dans de grosses unités d'hydrotraitement. Un traitement thermique (température supérieure à 50°C), pour la passivation oxydante, sous une pression partielle en oxygène de préférence d'au moins 7 kPa est utile pour amoindrir suffisamment ce caractère auto-échauffant. Une valeur considérée comme acceptable pourrait de préférence se situer à partir d'une TCAE de 100°C. Les critères opératoires permettant d'améliorer les propriétés d'auto échauffement sont la température, les pressions partielles d'oxygène et d'eau ainsi que le type de procédé. La température doit être suffisamment élevée, au-delà de 50°C, pour modifier en profondeur la phase sulfure. La quantité d'oxygène doit être suffisante, de préférence au-delà de 2,0 kPa, selon les exemples réalisés, même si ces valeurs ne sont pas exhaustives.

D'autre part, le couple température/pression partielle d'oxygène doit être ajusté pour contrôler l'intensité de la réaction d'oxydation. L'exemple 5 montre ainsi que la passivation est très efficace, mais s'effectue au détriment du taux de sulfuration (perte de soufre par volatilisation de dioxyde de soufre) et de l'activité catalytique. Des températures inférieures à 120°C sont donc avantageuses. On rappelle qu'une passivation en deux étapes est souvent judicieuse.

Enfin, l'ajout d'humidité dans le gaz permet encore d'améliorer l'effet passivant ainsi que le passage dans un four à lit mobile plutôt qu'un lit fixe.

D'autre part, il est remarquable de constater que ce nouveau procédé de passivation oxydante en traitement thermique en présence ou non de vapeur d'eau n'altère en rien les performances catalytiques des phases sulfures pour les réactions d'hydrotraitement.

## Revendications

1. - Procédé de passivation oxydante hors-site d'un catalyseur d'hydroconversion d'hydrocarbures, procédé conférant audit catalyseur un comportement non auto-échauffant procédé dans lequel ledit catalyseur présulfuré est soumis, à température comprise entre 75 et 120° C, à un traitement par un gaz contenant de l'oxygène moléculaire, et dans lequel la pression partielle en oxygène dans le gaz est d'au moins 7 kPa.

2. - Procédé selon la revendications 1 dans lequel la pression partielle en oxygène dans le dit gaz est d'au plus à 21,3 kPa.

3. - Procédé selon l'une des revendications précédentes dans lequel le dit gaz est sec.

4. - Procédé selon l'une des revendications 1 à 3 dans lequel le dit gaz est humide.

5. - Procédé selon la revendication 4 dans lequel la pression partielle d'eau est d'au moins 2 kPa.

6. - Procédé selon l'une des revendications précédentes effectué en deux étapes, la première avec une pression partielle d'oxygène supérieure ou égale à 7 kPa, la seconde étape avec une pression partielle en oxygène supérieure à celle de la première étape, la dite seconde étape débutant à la disparition de l'effet exothermique.

7. - Procédé selon l'une des revendications précédentes appliqué aux catalyseurs d'hydrotraitement.

8. - Procédé selon l'une des revendications précédentes appliqué aux catalyseurs d'hydrogénation.

9. - Procédé selon l'une des revendications précédentes mis en oeuvre dans le cadre d'un procédé fonctionnant en lit fixe.

10. - Procédé selon l'une des revendications précédentes mis en oeuvre dans le cadre d'un procédé fonctionnant avec un lit en mouvement.

## Claims

1. Process of ex-situ oxidizing passivation of a catalyst for hydroconversion of hydrocarbons , imparting to said catalyst a behavior that is not self-heating, process in which said presulfurized catalyst at a temperature ranging between 75°C and 120°C is subjected to treatment by a gas containing molecular oxygen and in which the oxygen partial pressure in the gas is at least 7 kPa.

2. Process according to claim 1, wherein the oxygen partial pressure in said gas is at most 21.3 kPa.

3. Process according to one of the preceding claims, wherein said gas is dry.

4. Process according to one of claims 1 to 3, wherein said gas is wet.

5. Process according to claim 4, wherein the water partial pressure is at least 2 kPa.

6. Process according to one of the preceding claims implemented in two stages, the first with an oxygen partial pressure of greater than or equal to 7 kPa, the second stage with an oxygen partial pressure of greater than that of the first stage, said second stage beginning with the disappearance of the exothermal effect.

7. Process according to one of the preceding claims applied to hydrotreating catalysts.

8. Process according to one of the preceding claims applied to hydrogenation catalysts.

9. Process according to one of the preceding claims implemented within the framework of a process taking place in a fixed bed.

10. Process according to one of the preceding claims implemented within the framework of a process taking place with a moving bed.

## Patentansprüche

1. Verfahren zur oxidischen Offsite-Passivierung eines Katalysators zur Wasserstoffumwandlung von Kohlenwasserstoffen, wobei das Verfahren dem Katalysator ein nicht selbsterhitzendes Verhalten verleiht, der Katalysator bei einer Temperatur zwischen 75°C und 120°C einer Behandlung durch ein Gas ausgesetzt wird, das molekularen Sauerstoff enthält, und wobei der Sauerstoffpartialdruck im Gas mindestens 7 kPa beträgt.

2. Verfahren nach Anspruch 1, wobei der Sauerstoffpartialdruck im Gas höchstens 21,3 kPa beträgt.

3. Verfahren nach einem der vorherigen Ansprüche, wobei das Gas trocken ist.

4. Verfahren nach einem der Ansprüche 1 bis 3, wobei das Gas nass ist.

5. Verfahren nach Anspruch 4, wobei der Wasserpartialdruck mindestens 2 kPa beträgt.

6. Verfahren nach einem der vorherigen Ansprüche, das in zwei Schritten durchgeführt wird, der erste mit einem Sauerstoffpartialdruck größer oder gleich 7 kPa, der zweite Schritt mit einem Sauerstoffpartialdruck größer als dem des ersten Schritts, wobei der zweite Schritt bei Verschwinden des exothermen Effekts beginnt.

7. Verfahren nach einem der vorherigen Ansprüche, angewandt auf Katalysatoren zur Wasserstoffbehandlung.

8. Verfahren nach einem der vorherigen Ansprüche, angewandt auf Katalysatoren zur Hydrierung.

9. Verfahren nach einem der vorherigen Ansprüche zur Anwendung im Rahmen eines Festbettverfahrens.

10. Verfahren nach einem der vorherigen Ansprüche zur Anwendung im Rahmen eines Wanderbettverfahrens.
